Europäisches Patentamt

European Patent Office

Office européen des brevets

(19)

(11) Publication number: **0 046 736**
**A2**

(12) **EUROPEAN PATENT APPLICATION**

(21) Application number: **81830118.6**

(22) Date of filing: **15.07.81**

(51) Int. Cl.³: **B 62 H 1/02**

(30) Priority: **27.08.80 IT 494180 U**

(43) Date of publication of application:
**03.03.82 Bulletin 82/9**

(84) Designated Contracting States:
**BE DE FR GB**

(71) Applicant: **EMMEPI S.r.l.**
**Via Grandi, 5**
**I-40057 Cadriano di Granarolo Emilia (Bologna)(IT)**

(72) Inventor: **Montanelli, Guido**
**Via del Lavoro, 58**
**I-40127 Bologna(IT)**

(74) Representative: **Pederzini, Paolo**
**BUGNION S.p.A. Via Farini n. 37**
**I-40124 Bologna(IT)**

(54) A resting device for two wheel vehicles.

(57) The device comprises a support (1) fastened to the frame of the vehicle, to which is articulated, by means of a pivot, a rod (3) that is movable between two extreme positions, that is to say, between a first, horizontal, extreme position of minimum volume and a second, vertical, extreme vehicle resting position, and vice versa.

Elastic means (7) with which the device is provided, exert an effect on the said rod (3) and on a rocker element (8) that oscillates along an axis (9) parallel to the axis of the said pivot. When the rod (3) is in the said second position, the element (8) intercepts, under the action of the said elastic means (7), a locator member (10) integral with the rod (3) and, in this way, the said second position is stabilized.

The operation of an unlocking lever (12) that is integral with the rocker element (8) and is outside the said support (1), causes the rocker element (8) to be released from the rod (3) which, under the action of the said elastic means (7), moves into the said first position.

FIG 1

EP 0 046 736 A2

## A resting device for two wheel vehicles

As is known, resting devices for two wheel vehicles, particularly bicycles and motorcycles, commonly called "stands", consist essentially of a support that can be fastened to the frame of the vehicle in an integral fashion and sustains, by means of a pivot, a long rod.

The said rod is movable from a first extreme position of minimum volume, in which it is kept almost horizontal at the side of the lower part of the frame of the vehicle, to a second extreme position for resting the vehicle, in which the said rod is virtually in a vertical position, slightly inclined towards the vehicle, and resting on the ground, in such a way as to constitute a reliable "prop" for the said vehicle.

Certain problems arise with the said stands, the most significant being somewhat onerous assembly operations, on the part of the manufacturer, and the absolute necessity, on the part of the user, to use the upper part or side of one of his or her feet to lever up the said rod, each time it is wished to utilize the vehicle, in order to cause the said rod to return to its extreme position of minimum volume; this inevitably compels the user to rest the upper part or side of the vamp of his or her shoe against the rod.

The object of the invention is to overcome the aforementioned difficulties by creating a resting device for two wheel vehicles which, in addition to being particularly quick and easy to assemble, allows the user to bring about the return of the resting rod to its position of minimum volume in an easier way, through an external lever on which the sole of one of the shoes of the user can press down without any difficulty.

This object is achieved with the device forming the subject of the invention, of the type that comprises a support that can be fastened to the frame of the vehicle in an integral fashion and sustains, by means of a pivot, a long rod movable from a first, almost horizontal, extreme position of minimum volume, to a second, almost vertical, extreme position for resting the vehicle, the said resting device being characterized by the fact that it comprises elastic means that exert on the said long rod, a torque pointed in the direction that goes from the said second to the said first extreme position of minimum volume and that, contemporaneously, come into contact with a first extremity of a rocker element, pivoted to the said support, causing a couple that tends to maintain the second extremity of the said rocker element in contact with the peripheral part of the said rod placed in the region of the said pivot, there being along the said part a member for locating the second extremity of the said rocker element, so as to maintain the said rod stably in the said second extreme resting position and overcome the said torque to which the said rod is subjected, the said rocker element being provided with a tail piece that stretches towards the outside of the said support, commencing at the said pivot or first extremity, with which is integral an unlocking lever, operated from the outside through a top to bottom thrust, that counteracts the couple applied to the said rocker element and raises the said second extremity of the rocker element away from the said locator member, thus releasing the said rod which, from the said second position is able to return to the said first position of minimum volume.

Not only is the said unlocking lever noticeably simple from the point of view of construction and assembly but, with a simple top to bottom thrust, it releases the said rod which thus returns, in a far easier way for the user, to its position of minimum volume.

Further characteristics and advantages of the invention will become more obvious from the detailed description of the device that follows, illustrated on the accompanying drawings, in which:

Figure 1 is a perspective view of the invention, in one of its two stable positions;

Figure 2 is a lateral view of the invention as depicted in the preceding figure, with certain parts removed in order that others may be seen better;

Figure 3 is a perspective view of the invention, in its other stable position;

Figure 4 is a plan view of the invention with certain minor modifications.

With reference to the drawings listed above, the resting device in question comprises a support (1) that can be fastened, at (2), to the frame of a two wheel vehicle in an integral fashion and sustains, by means of a pivot, a long rod (3). More specifically, the rod (3) is able to rotate around a pin (4) carried transversely by a pair of opposite walls (5) and (6) of the support (1).

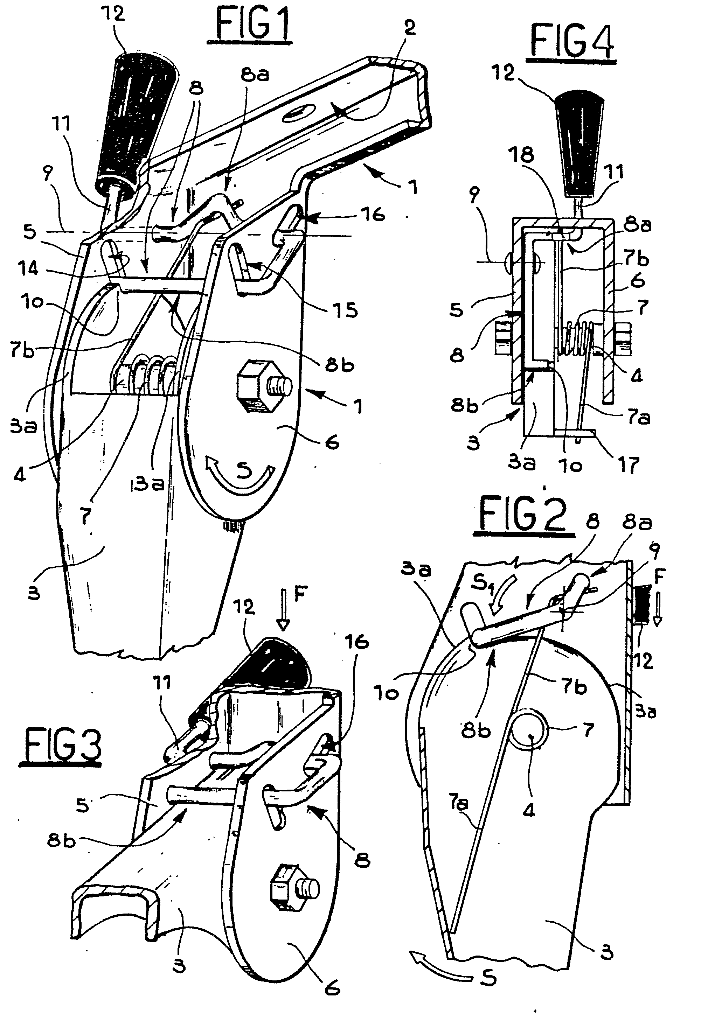

The rod (3) is movable from a first, almost horizontal, extreme position of minimum volume (see Figure 3), to a second, almost vertical, extreme position for resting the vehicle (see Figures 1, 2 and 4).

The resting device in question comprises, furthermore, elastic means, constituted by one single helical spring (7) wound around the pin (4). One extremity (7a) of the said spring (7) exerts an effect on the rod (3) and causes a torque pointed in the direction S that goes from the said second to the first extreme position of minimum volume. Contemporaneously, the other extremity (7b) of the spring (7) exerts an effect on a first extremity (8a) of a rocker element (8). The latter, pivoted at (9) to the said support, produces a couple which, in the case shown in the figures, points in the opposite direction to S, namely the direction $S_1$, and tends to maintain the second extremity (8b) of the rocker element (8) in contact with the peripheral part (3a) of the rod (3) placed in the region of the pin (4). In, for example, the case in Figure 1, the part (3a) is, in actual fact, divided into two virtually semicircular sections, each of which adjacent to one of the walls (5) and (6) of the support (1). With this particular form of construction, each peripheral section (3a) is provided with a locator member, in the case in question a tooth (10), which serves to contrast the extremity (8b) of the rocker element (8), so as to maintain the rod (3) stably in the second extreme position, that is to say in its resting position, and to counteract the torque S to which the said rod (3) is subjected.

The rocker element (8) is provided with a tail piece (11) that extends towards the outside of the support (1) and with which is integral an unlocking lever (12) operated from the outside through a top to bottom thrust in the direction of the arrow F. In this way, the operation of the lever (12) contrasts the couple $S_1$ applied to the rocker element (8), raises the extremity (8b) thereof from the tooth (10), and releases the rod (3) which is thus able to return from the second vertical position to the first position of minimum volume.

With special reference to Figures 1, 2 and 3, the conformation of the rocker element (8) is, in plan view form, substantially a "U", where the extremity (8a) is constituted by an "ansa" (see Figures 1 and 3) formed on the stem that, in the case in question, extends along the pivoting axis (9), while the other stem coincides, in practice, with the extremity (8b). The tail piece (11) is shaped in the form of an "L" upside down, as can clearly be seen in Figures 1 and 3.

The stem coinciding with the extremity (8b) protrudes transversely from the aforementioned walls (5) and (6), through a pair of slots (14) and (15), respectively, provided to allow the free ocillation of the extremity (8b) from a first extreme lowered position, corresponding to the said first extreme position of minimum volume of the rod (3), to a second extreme raised position adopted because of the operation of the unlocking lever (12). The other stem, that is to say the one coinciding with the pivoting axis (9), protrudes from the wall (6), through a corresponding slot (16) provided to allow the extremity (8a) (shaped, as stated previously, with an "ansa") to pass freely at the time of assembly.

The said assembly operation is particularly simple since the rocker element is, in practice, inserted by its stems inside the aforementioned slots, and only subsequently is one extremity bent to constitute the tail piece (11) that is shaped in the form of an "L" upside down.

In one slightly modified form of embodiment for the device according to the invention, the rocker element (8) is located right inside the support (1), apart from the extremity thereof that constitutes the tail piece (11) (see Figure 4) which, this time, is bent prior to insertion. In this case, the rocker element (8) is pivoted at (9) to the support (1) at an intermediate point in between the stems that define the extremities (8a) and (8b).

In the said case, as shown in Figure 4, the rod (3) is provided with a projection (17) that serves to locate the extremity (7a) of the spring (7), while the extremity (7b) of the spring (7) exerts an effect on the extremity (8a) of the rocker element in, for example, the region of a small "ansa" (18).

Note should be taken of the assembly simplicity in this case too, and in both cases, of the easy way in which the rod (3) is released by simply pressing down the lever (12).

Claims:

1. A resting device for two wheel vehicles, of the type that comprises a support (1) that can be fastened to the frame of the vehicle in an integral fashion and sustains, by means of a pivot, a long rod (3) movable from a first, almost horizontal, extreme position of minimum volume, to a second, almost vertical, extreme position for resting the vehicle, the said resting device being characterized by the fact that it comprises elastic means (7) that exert on the said long rod (3), a torque S pointed in the direction that goes from the said second to the said first extreme position of minimum volume and that, contemporaneously, come into contact with a first extremity (8a) of a rocker element (8), pivoted to the said support (1), causing a couple $S_1$ that tends to maintain the second extremity (8b) of the said rocker element (8) in contact with the peripheral part (3a) of the said rod (3) placed in the region of the said pivot, there being along the said part (3a) a member (10) for locating the second extremity (8b) of the said rocker element (8), so as to maintain the said rod (3) stably in the said second extreme resting position and overcome the said torque S to which the said rod (3) is subjected, the said rocker element (8) being provided with a tail piece (11) that stretches towards the outside of the said support (1), commencing at the said pivot (9) or first extremity (8a), with which is integral an unlocking lever (12), operated from the outside through a top to bottom thrust, that counteracts the couple $S_1$ applied to the said rocker element (8) and raises the said second extremity (8b) of the rocker element (8) away from the said locator member (10), thus releasing the said rod (3) which, from the said second position, is able to return to the said first position of minimum volume.

- 8 -

2. A device according to Claim 1, wherein the said elastic means are constituted by one single helical spring (7) wound around a pin (4) that is carried transversely by the said support (1) and defines the said pivot around which the said rod (3) can rotate, one extremity (7a) of the spring (7) exerting an effect on the said rod (3), underneath the said pin (4), and the other extremity (7b) exerting an effect on the first extremity (8a) of the said rocker element (8).

3. A device according to the preceding claims, wherein the conformation of the said rocker element (8) is, in plan view form, substantially a "U", and the said element is provided, in continuation of a first stem, with the said tail piece (11) that is in the shape of an "L" upside down.

4. A device according to Claim 3, wherein the said rocker element (8) has, moreover, along the said first stem, a projection that is turned towards the outside and defines the said first extremity (8a) on which the said spring (7) exerts an effect.

5. A device according to Claim 4, wherein the said projection is defined by an "ansa" formed on the said first stem that constitutes a housing for the extremity (7b) of the said spring (7).

6. A device according to Claims 1 and 3, wherein the said rocker element (8) is pivotally connected to the said support (1) at an intermediate point (9) in between the said stems that define the aforementioned extremities (7a) and (7b), the said "L" shaped tail piece (11) protruding from the said support (1) through a vertical slot.

7. A device according to Claims 1, 3, 4 and 5, wherein the said rocker element (8) is pivoted to the said support (1) by means of the said first stem that protrudes transversely from a pair of opposite walls (5) and (6) of the said support (1) and of the other stem that defines the said second extremity (8b) and passes through a pair of slots (14) and (15) made in the said walls (5) and (6) provided to allow the free oscillation of the said second extremity (8b) from a first extreme lowered position, corresponding to the said second extreme position, to a second extreme raised position brought about by the operation of the said unlocking lever (12) releasing the said rod (3) from its said second extreme resting position.

8. A device according to Claims 5 and 7, wherein the said first stem protrudes from the wall (6) of the said support (1) opposite the wall (5) to which the lever (12) is pivoted, through a slot (16) provided to allow the said "ansa" to pass freely at the time of assembly.

0046736

FIG1

FIG4

FIG2

FIG3